# EUROPÄISCHE PATENTSCHRIFT

(11) **EP 1 325 240 B1**
(45) Veröffentlichungstag und Bekanntmachung des Hinweises auf die Patenterteilung: **26.01.2005**
(21) Anmeldenummer: 01964719.7
(22) Anmeldetag: 13.09.2001
(51) Int. Cl.: F16D 23/06

(54) **GESINTERTE SCHALTMUFFE**
SINTERED GEAR SHIFT SLEEVE
MANCHON DE COMMANDE FRITTE

(30) Priorität: 12.10.2000 AT 173400
(43) Veröffentlichungstag der Anmeldung: 09.07.2003
(73) Patentinhaber: Miba Sintermetall Aktiengesellschaft, 4663 Laakirchen (AT)
(72) Erfinder: SANDNER, Christian, A-4810 Gmunden (AT)
(74) Vertreter: Hübscher, Helmut, Dipl.-Ing.
(86) Internationale Anmeldenummer: PCT/AT2001/000287
(87) Internationale Veröffentlichungsnummer: WO 2002/031374

(56) Entgegenhaltungen:
- DE-A- 2 510 657
- DE-A- 19 912 131
- US-A- 3 618 724
- US-A- 5 096 037

## Beschreibung

### Technisches Gebiet

Die Erfindung bezieht sich auf eine gesinterte Schaltmuffe für eine Synchronisiereinrichtung eines Schaltgetriebes mit einer an einem Muffenkörper vorgesehenen Klaueninnenverzahnung, deren Zähne stirnseitig in Umfangsrichtung abfallende Dachschrägen bilden, und auf ein Verfahren zum Herstellen einer solchen Schaltmuffe.

### Stand der Technik

Schaltmuffen für Synchronisiereinrichtungen von Schaltgetrieben, siehe z.B. US-A-5 096 037 weisen eine mit einer Klauenaußenverzahnung eines Kupplungskörpers zusammenwirkende Klaueninnenverzahnung auf, deren Zähne stirnseitig in Umfangsrichtung abfallende Dachschrägen bilden. Bei einer axialen Schaltverschiebung der Schaltmuffe wirken die stirnseitigen Dachschrägen der Klaueninnenverzahnung der Schaltmuffe zunächst mit entsprechenden Gegenschrägen der Zähne eines zwischen der Schaltmuffe und dem Kupplungskörper vorgesehenen Synchronringes und dann mit den Gegenschrägen der Klauenaußenverzahnung des Kupplungskörpers zusammen, um einerseits auf den Synchronring und anderseits auf den Kupplungskörper ein Drehmoment ausüben zu können, das die für den axialen Eingriff der jeweils zusammenwirkenden Verzahnungen notwendigen Drehverstellungen des Synchronringes und des Kupplungskörpers gegenüber der Schaltmuffe ermöglicht. Während beispielsweise die Synchronringe pulvermetallurgisch gefertigt werden, werden die Schiebemuffen aus Gründen der auftretenden Belastungen im allgemeinen aus Stahl hergestellt. Aufgrund der möglichen hohen Verdichtung von Sinterpulvern durch neuere Preßverfahren können auch gesinterte Schaltmuffen den mechanischen Werkstoffanforderungen genügen. Allerdings steht einer wirtschaftlichen Herstellung gesinterter Schaltmuffen eine unzulässig hohe Belastung der Preßwerkzeuge durch die geforderten großen Preßdrücke entgegen. Im Bereich der sirnseitigen Dachschrägen der Zähne der Klaueninnenverzahnung werden nämlich dünne, axial vorstehende Stempel benötigt, die den auftretenden Preßdrücken nicht standhalten.

### Darstellung der Erfindung

Der Erfindung liegt somit die Aufgabe zugrunde, eine Schaltmuffe für eine Synchronisiereinrichtung eines Schaltgetriebes der eingangs geschilderten Art so auszugestalten, daß sie mit den erforderlichen hohen Preßdrücken aus Sinterpulver geformt werden kann, ohne die Gefahr einer Werkzeugüberlastung in Kauf nehmen zu müssen.

Die Erfindung löst die gestellte Aufgabe dadurch, daß die Zähne um den axialen Erstreckungsbereich der Dachschrägen über die Stirnflächen des Muffenkörpers vorstehen und im Bereich des Überstandes eine über den Fußkreis radial nach außen verlängerte Höhe mit über diese Höhe durchgehenden Dachschrägen aufweisen.

Die über die Stirnfläche des Muffenkörpers vorstehenden Dachschrägen auf den Stirnseiten der Zähne der Klaueninnenverzahnung bedingen entsprechende Vertiefungen im Preßwerkzeug, die nicht auf den Zahnquerschnitt zwischen den stirnseitigen Dachschrägen beschränkt sind, sondern sich in den Bereich der Stirnflächen des Muffenkörpers erstrecken, was eine vorteilhafte Werkzeugausbildung ohne vorstehende, bruchgefährdete Stempelabschnitte erlaubt. Die über den Fußkreis der Zähne radial nach außen verlängerten Dachschrägen beeinflussen die Wirkungsweise der Schaltmuffe nicht. Der axiale Anschlag der Schaltmuffe, der bei herkömmlichen Schaltmuffen durch die Stirnflächen des Muffenkörpers gebildet wird, ergibt sich bei der erfindungsgemäßen Schaltmuffe durch den Überstand der Zähne im Bereich der Verschneidungen der Dachschrägen, wenn nicht für einen entsprechend axial rückversetzten Anschlag gesorgt wird.

Für besonders vorteilhafte Konstruktionsbedingungen kann dadurch gesorgt werden, daß sich der Überstand der Zähne über die radiale Höhe der Stirnflächen des Muffenkörpers erstreckt. In diesem Fall ergeben sich vergleichsweise großflächige Dachschrägen, die eine hinsichtlich der Belastbarkeit günstige Negativform des Preßwerkzeuges bedingen. Die sich über die radiale Höhe der Stirnflächen des Muffenkörpers erstreckenden Dachschrägen lassen allerdings keine axiale Rückversetzung des Muffenanschlages zu. Für einen solchen rückversetzten Muffenanschlag muß ein äußerer Ringbereich der Stirnflächen des Muffenkörpers frei von den Dachschrägen bleiben.

Da für unterschiedliche Bauteilhöhen die Preßwerkzeuge unterschiedlich hoch mit Sinterpulver gefüllt werden müssen, kommt es bei den eingesetzten, hoch belastbaren einstückigen Preßstempeln zu einer ungleichmäßigen Dichteverteilung Wegen der im Vergleich zu herkömmlichen Klaueninnenverzahnungen erheblich vergrößerten Dachschrägenfläche der Zähne können die Abweichungen hinsichtlich der Dichte in diesen Bereichen deutlich verringert werden. Darüber hinaus besteht noch die Möglichkeit, über das Herstellungsverfahren auf die Dichteverteilung im Bereich der Dachschrägen Einfluß zu nehmen. Werden nämlich die Überstände der Zähne mit einem Aufmaß gepreßt und gesintert und erst beim Kalibrieren auf ein Sollmaß verdichtet, so kann durch die beim Kalibrieren größere Verdichtung der Zahnüberstände ein Ausgleich der beim Formpressen entstehenden Dichteunterschiede geschaffen werden.

### Kurze Beschreibung der Zeichnungen

In der Zeichnung ist der Erfindungsgegenstand beispielsweise dargestellt. Es zeigen
- Fig. 1: eine erfindungsgemäße, gesinterte Schaltmuffe in einem Schaubild,
- Fig. 2: diese Schaltmuffe in einer stirnseitigen Ansicht,
- Fig. 3: die Schaltmuffe in einer achsnormalen Ansicht,
- Fig. 4: einen Schnitt nach der Linie IV-IV der Fig. 2, die
- Fig. 5: und 6 zwei unterschiedliche Ausgestaltungsmöglichkeiten der Dachschrägen im Bereich der Zahnüberstände in einer Draufsicht auf die Stirnfläche des Muffenkörpers ausschnittsweise in einem größeren Maßstab,
- Fig. 7: eine Ausführungsvariante einer erfindungsgemäßen Schaltmuffe in einer der Fig. 1 entsprechenden Darstellung,
- Fig. 8: die Schaltmuffe nach der Fig. 7 in einer stimseitigen Ansicht,
- Fig. 9: eine achsnormale Ansicht der Schattmuffe gemäß der Fig. 7,
- Fig. 10: einen Schnitt nach der Linie X-X der Fig. 8 und
- Fig. 11: einen vereinfachten Schnitt durch die Zahnüberstände entlang einer zur Muffenachse koaxialen Zylinderfläche ausschnittsweise in einem größeren Maßstab.

### Bester Weg zur Ausführung der Erfindung

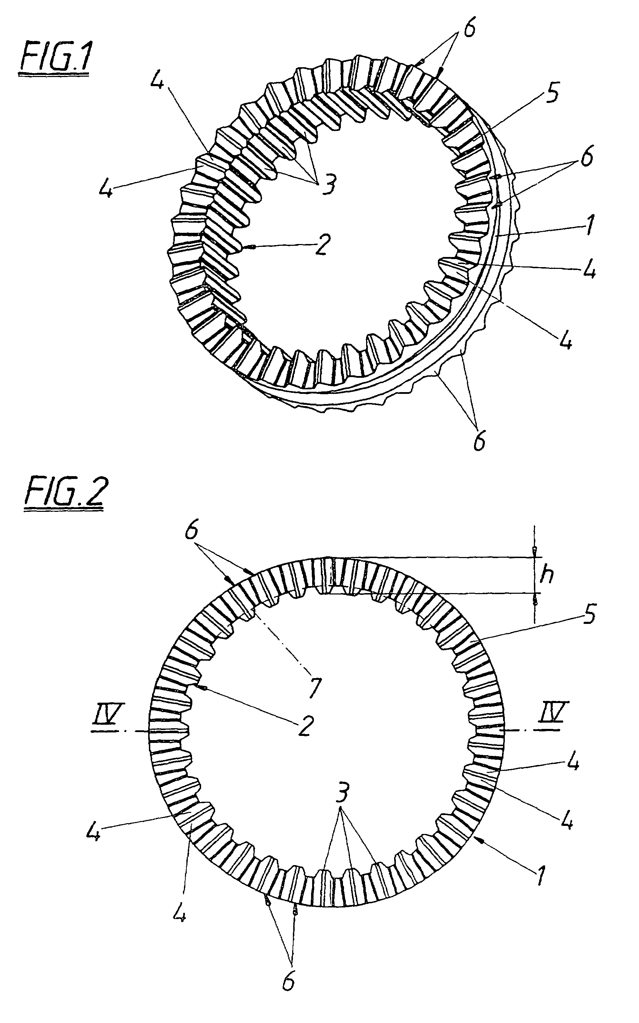

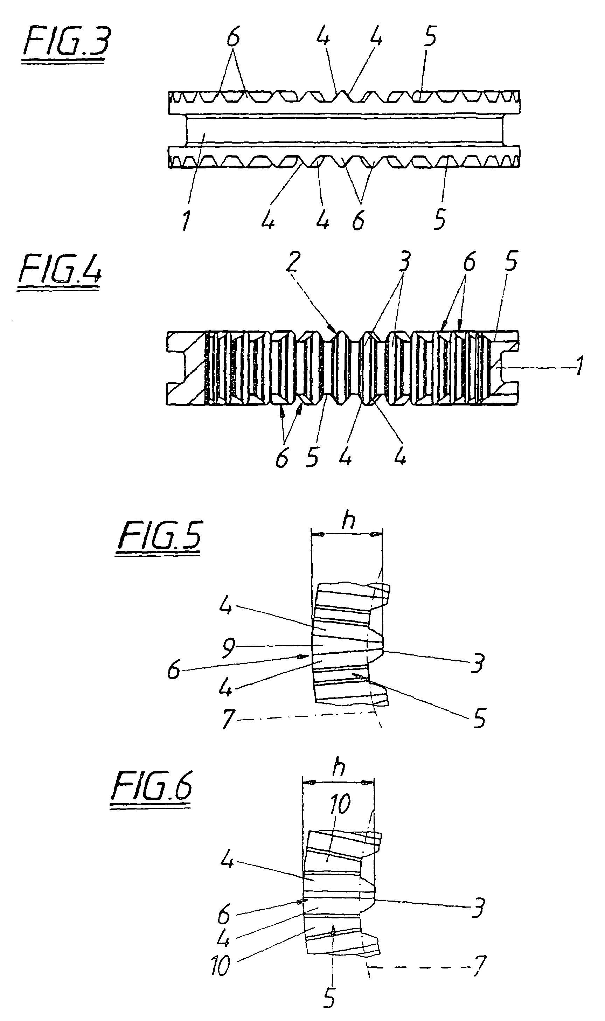

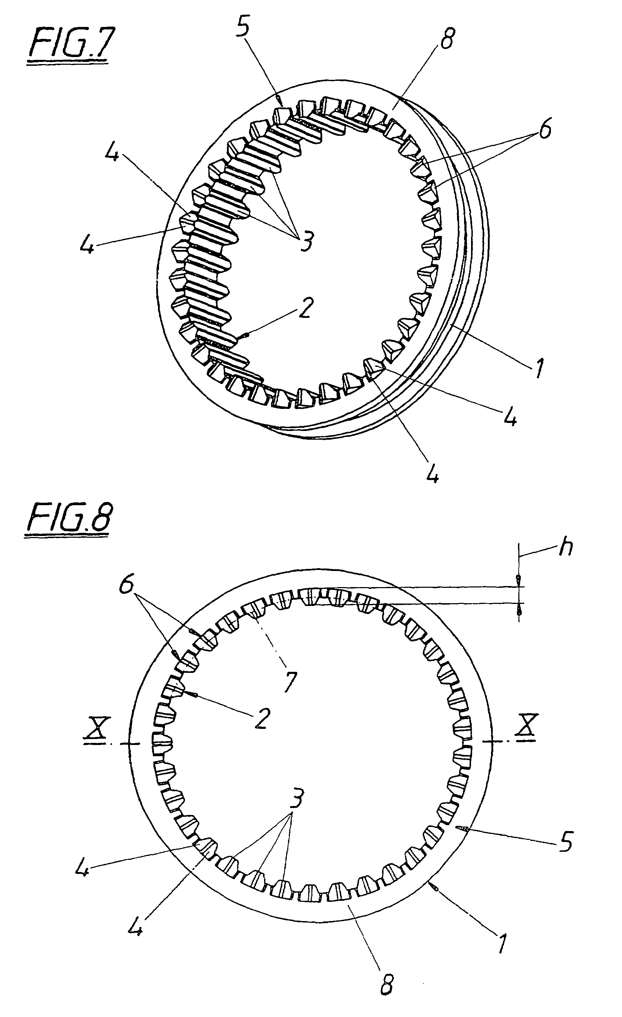

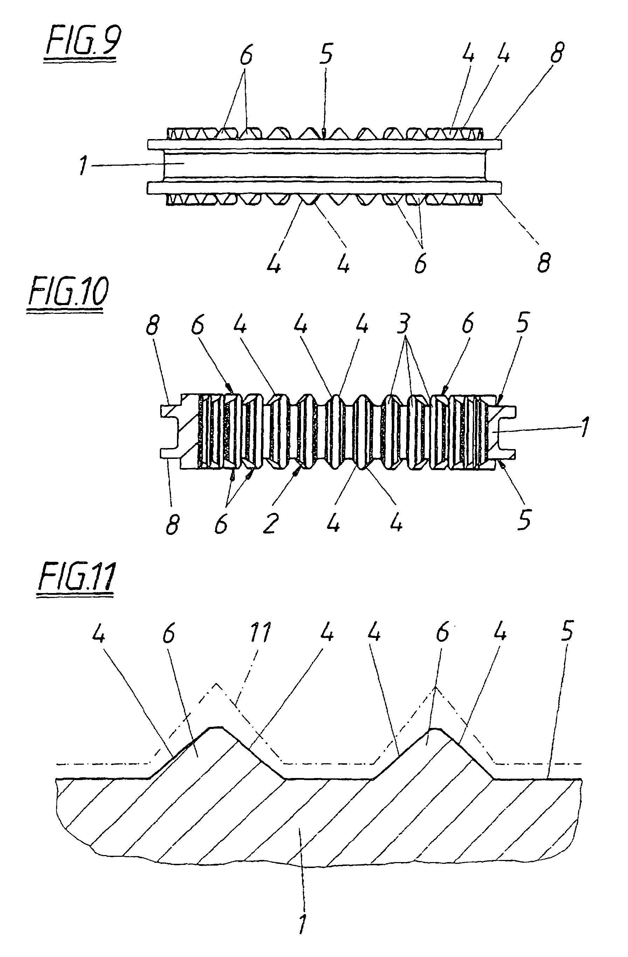

Die dargestellte Schaltmuffe besteht aus einem Muffenkörper 1 und einer Klaueninnenverzahnung 2, deren Zähne 3 stirnseitige Dachschrägen 4 bilden, die in Umfangsrichtung nach entgegengesetzten Seiten hin abfallen. Die Zähne 3 stehen um den axialen Erstreckungsbereich der Dachschrägen 4 über die Stirnflächen 5 des Muffenkörpers 1 vor und weisen im Bereich des Überstandes 6 eine Höhe h auf, die über den Fußkreis 7 radial nach außen verlängert ist. Die Dachschrägen 4 erstrecken sich dabei über die gesamte Höhe h der Überstände 6. Während sich die Überstände 6 der Zähne 3 gemäß den Fig. 1 bis 6 über die radiale Höhe der Stirnflächen 5 des Muffenkörpers 1 erstrecken, bleibt nach den Fig. 7 bis 10 ein äußerer Ringbereich 8 der Stirnfläche 5 von den Zahnüberständen 6 frei. Im Gegensatz zur Schaltmuffenausbildung entsprechend den Fig. 1 bis 6 kann daher der von den Zahnüberständen 6 freie äußere Ringbereich 8 der Stirnflächen 5 des Muffenkörpers 1 als axial gegenüber den Zahnstirnseiten zurückversetzte Anschlagfläche dienen. Schaltmuffen nach den Fig. 1 bis 6 bilden einen solchen axialen Anschlag über die Zahnüberstände 6. Die preßtechnische Formung dieser Überstände 6 bringt keine Schwierigkeit mit sich, weil der stirnseitige Stempel lediglich entsprechend den Überständen 6 ausgenommen sein muß, was ohne das Vorsehen bruchgefährdeter Stempelteile möglich ist. Dabei spielt es keine Rolle, ob zwischen den Dachschrägen 4 gemäß der Fig. 5 eine sektorförmige Stegfläche 9 gebildet wird oder die Dachschrägen 4 zwischen sich lediglich einen schmalen Übergangssteg aufweisen, wie dies die Fig. 6 zeigt. In diesem Fall formt die Stirnfläche 9 des Muffenkörpers 5 zwischen den Überständen 6 sektorförmige Abschnitte 10.

Wie aus den Fig. 7 bis 10 unmittelbar ersichtlich ist, sind die Höhen h der Überstände 6 bei einer Schaltmuffenausbildung mit einer rückversetzten Anschlagfläche in Form eines äußeren Ringbereiches 8 entsprechend kleiner, was hinsichtlich der Belastung der Preßwerkzeuge etwas ungünstigere Verhältnisse schafft. Trotzdem bleiben die Stempelbelastungen wegen des Fehlens schmaler vorstehender Teile in zulässigen Grenzen.

Da bei unterschiedlichen Füllhöhen der Preßwerkzeuge mit unterschiedlichen Preßdichten gerechnet werden muß, kann im Bereich der Überstände 6 die Schaltmuffe mit einem Aufmaß 11 formgepreßt werden, wie dies in der Fig. 11 strichpunktiert angedeutet ist. Werden nach dem Sintern der gepreßten Schaltmuffe die Überstände 6 beim Kalibrieren auf das in vollen Linien gezeichnete Sollmaß verdichtet, so treten im Bereich der Überstände 6 größere Verdichtungen auf, die einen weitgehenden Ausgleich der unterschiedlichen Preßdichten mit sich bringen. Mit Hilfe dieser Maßnahme kann daher eine ausreichend gleichmäßige Werkstoffdichte auch im Bereich der Überstände 6 der Zähne 3 sichergestellt werden.

## Patentansprüche

1. Gesinterte Schaltmuffe für eine Synchronisiereinrichtung eines Schaltgetriebes mit einer an einem Muffenkörper (1) vorgesehenen Klaueninnenverzahnung (2), deren Zähne (3) stirnseitig in Umfangsrichtung abfallende Dachschrägen (4) bilden, **dadurch gekennzeichnet, daß** die Zähne (3) um den axialen Erstrekkungsbereich der Dachschrägen (4) über die Stirnflächen (5) des Muffenkörpers (1) vorstehen und im Bereich des Überstandes (6) eine über den Fußkreis (7) radial nach außen verlängerte Höhe (h) mit über diese Höhe (h) durchgehenden Dachschrägen (4) aufweisen.

2. Schaltmuffe nach Anspruch 1, **dadurch gekennzeichnet, daß** sich der Überstand (6) der Zähne (3) über die radiale Höhe der Stirnflächen (5) des Muffenkörpers (1) erstreckt.

3. Verfahren zum Herstellen einer gesinterten Schaltmuffe nach Anspruch 1 oder 2, wobei der Muffenkörper (1) mit der Klaueninnenverzahnung (2) und den Überständen (6) der Zähne (3) aus einem Sinterpulver gepreßt, gesintert und anschließend kalibriert wird, **dadurch gekennzeichnet, daß** die Überstände (6) der Zähne (3) mit einem Aufmaß gepreßt und gesintert und erst beim Kalibrieren auf ein Sollmaß verdichtet werden.

## Claims

1. A sintered gear shift sleeve for a synchronising device in a change-speed gear, with an internal claw toothing (2) provided on a sleeve body (4), the teeth (3) thereof forming roof bevels (4) which slope down in the peripheral direction, **characterised in that** the teeth (3) project beyond the end faces (5) of the sleeve body (1) around the axial zone where the roof bevels (4) extend and in the region of the projection (6) have a height (h) which is extended outwardly radially beyond the root circle (7), with roof bevels (4) extending continuously over said height (h).

2. A gear shift sleeve according to claim 1, **characterised in that** the projection (6) of the teeth (3) extends over the radial height of the end faces (5) of the sleeve body (1).

3. A method of making a sintered gear shift sleeve according to claim 1 or 2, wherein the sleeve body (1) with the internal claw toothing (2) and the projections (6) of the teeth (3) is pressed from a sintering powder, sintered and then calibrated, **characterised in that** the projections (6) of the teeth (3) are pressed and sintered with an over-size and compacted to a required dimension only on calibration.

## Revendications

1. Manchon de manoeuvre fritté, pour un dispositif de synchronisation d'une boîte de vitesses à commande manuelle, avec une denture intérieure à griffes (2), prévue sur un corps de manchon (1), denture intérieure dont les dents (3) forment en face frontale des pentes en forme de toit (4) descendant en direction périphérique, **caractérisé en ce que** les dents (3) font saillie autour de la plage d'étendue axiale des pentes de toit (4), sur les faces frontales (5), du corps de manchon (1) et, dans la zone du dépassement (6), présentent une hauteur (h) prolongée radialement vers l'extérieur au-dessus du cercle de pied (7), avec des pentes de toit (4) continues sur la valeur de cette hauteur (h).

2. Manchon de manoeuvre selon la revendication 1, **caractérisé en ce que** le dépassement (6) des dents (3) s'étend sur la hauteur radiale des faces frontales (5) du corps de manchon (1).

3. Procédé de fabrication d'un manchon de manoeuvre fritté selon la revendication 1 ou 2, le corps de manchon (1), avec la denture intérieure à griffes (2) et les dépassements (6) de dents (3), étant pressé à partir d'une poudre de frittage, fritté et ensuite calibré, **caractérisé en ce que** les dépassements (6) des dents (3) sont pressés avec une surépaisseur et frittés et, ensuite, compactés à une cote théorique au moment du calibrage.
